# EUROPÄISCHE PATENTSCHRIFT

(11) **EP 1 809 964 B1**
(45) Veröffentlichungstag und Bekanntmachung des Hinweises auf die Patenterteilung: **13.04.2011**
(21) Anmeldenummer: 05786451.4
(22) Anmeldetag: 21.09.2005
(51) Int. Cl.: F26B 25/22, G01N 5/04

(54) **TROCKNUNGSWAAGE**
DRYING BALANCE
BALANCE SECHEUSE

(30) Priorität: 06.11.2004 DE 102004053734
(43) Veröffentlichungstag der Anmeldung: 25.07.2007
(73) Patentinhaber: SARTORIUS AG, 37075 Göttingen (DE)
(72) Erfinder: DIEDRICH, Karin, 37181 Hardegsen (DE); NAGEL, Horst, 37136 Seeburg (DE); SPANNAGEL, Wilfried, 37081 Göttingen (DE)
(86) Internationale Anmeldenummer: PCT/EP2005/010160
(87) Internationale Veröffentlichungsnummer: WO 2006/048080

(56) Entgegenhaltungen:
- EP-A- 0 526 297
- WO-A-00/14552
- DE-A1- 3 231 004
- FR-A- 2 714 182
- US-A- 3 405 268
- US-A- 4 466 198
- US-A- 4 485 284
- US-A- 5 046 356
- US-A- 5 983 711
- US-A1- 2002 035 792
- US-B1- 6 227 041
- PATENT ABSTRACTS OF JAPAN Bd. 007, Nr. 093 (P-192), 19. April 1983 (1983-04-19) & JP 58 018155 A (SHIMAZU SEISAKUSHO KK), 2. Februar 1983 (1983-02-02)
- PATENT ABSTRACTS OF JAPAN Bd. 007, Nr. 290 (P-245), 24. Dezember 1983 (1983-12-24) & JP 58 165038 A (KOMATSU SEISAKUSHO KK), 30. September 1983 (1983-09-30)

## Beschreibung

Die Erfindung bezieht sich auf eine Trocknungswaage mit einer Waagschale, die sich auf einem Wägesystem abstützt, und mit einer Heizquelle zur Erwärmung und Trocknung einer Probe auf der Waagschale. Die Erfindung bezieht sich weiterhin auf ein Verfahren zum Betrieb dieser Trocknungswaage.

Trocknungswaagen dieser Art sind allgemein bekannt und zum Beispiel in der DE 36 15 660 C2 oder der DE 199 56 372 C2 beschrieben.

Diese Trocknungswaagen sind zwar relativ schnell im Vergleich zur Trockenschrankmethode, benötigen aber doch einige Minuten zur Bestimmung des Feuchtegehaltes der Probe. In der industriellen Fertigung, wo bei kontinuierlich ablaufenden Produktionsvorgängen eine Materialfeuchtebestimmung mit einer Messzeit von höchstens einigen Sekunden erforderlich ist, sind Trocknungswaagen dieser Art deshalb nicht einsetzbar. In diesen Fällen werden häufig indirekte Messverfahren, wie zum Beispiel die Messung der optischen Absorption, eingesetzt. Die Kalibrierkurven dieser indirekt messenden Feuchtemessgeräte werden dann üblicherweise Punkt für Punkt aufgenommen, indem Proben mit verschiedenem Feuchtegehalt sowohl mit dem indirekt messenden Feuchtemessgerät als auch mit der bekannten Trocknungswaage gemessen werden und aus den so ermittelten Wertepaaren die Kalibrierkurve ermittelt wird. Diese Vorgehensweise erfordert aber die Herstellung einer Vielzahl von Proben und ist daher umständlich und zeitaufwändig.

Ferner ist aus dem Gebrauchsmuster DE 88 02 378 U1 eine Trocknungswaage mit einem eingebauten Temperaturfühler zur Überwachung und Regelung der Leistung der Heizquelle bekannt, bei der eine Temperatureichscheibe mit einem weiteren Temperaturfühler anschließbar ist. Die Temperatureichscheibe erhält durch das Auftragen einer dünnen Schicht des Probenmaterials dessen Absorptionskoeffizienten. In einem Eichzyklus kann dann der in die Trocknungswaage eingebaute Temperaturfühler relativ zum weiteren Temperaturfühler in der Temperatureichscheibe kalibriert werden. Diese so erhaltene Kalibrierkurve wird dann in den nachfolgenden Messzyklen mit wirklichen Proben benutzt, um die Heizquelle so zu regeln, dass die vorgesehene Trocknungstemperatur der Probe eingehalten wird. - In der DE 88 02 378 U1 ist außerdem vorgesehen, eine einfacher handhabbare Temperatureichscheibe als Sekundärnormal zu benutzen, bei der der Absorptionskoeffizient des Probenmaterials durch stark und schwach absorbierende Flächen im richtigen Flächenverhältnis nachgebildet wird. Das richtige Flächenverhältnis muss dabei durch eine einmalige Messung relativ zur Temperatureichscheibe mit Probensubstanz ermittelt werden.

Aufgabe der Erfindung ist es daher, eine Trocknungswaage der eingangs genannten Art so weiterzubilden, dass mit ihrer Hilfe eine vereinfachte Kalibrierung von indirekt messenden Feuchtemessgeräten möglich ist.

Erfindungsgemäß wird dies dadurch erreicht, dass zusätzlich zum Wägesystem zur Messung des feuchteabhängigen Gewichtes der Probe ein Sensor zur gleichzeitigen Messung des feuchteabhängigen Absorptions-, Transmissions- oder Reflexionskoeffizienten der Probe in mindestens einem vorgegebenen optischen Spektralbereich zumindest teilweise in die Trocknungswaage integriert ist.

Durch die Integration des Sensors zur Messung des Absorptions-, Transmissions- oder Reflexionskoeffizienten in die Trocknungswaage kann während des Trocknungsvorganges kontinuierlich der Absorptions-, Transmissions- oder Reflexionskoeffizient bestimmt werden; aus dem ebenfalls kontinuierlich vom Wägesystem bestimmten Gewichtswert der Probe kann zum Abschluss des Trocknungsvorganges der Feuchtegehalt der Probe berechnet werden; damit stehen nach dem Ende des Trocknungsvorganges Wertepaare für den Feuchtegehalt der Probe und für den zugehörigen Absorptions-, Transmissions- oder Reflexionskoeffizienten zur Verfügung, die direkt die Kalibrierkurve ergeben. Wird diese Messung gemäß dem Verfahrensanspruch mit einer Probe mit maximalem Feuchtegehalt durchgeführt, so kann in einem einzigen Trocknungsvorgang einer Probe die gesamte Kalibrierkurve ermittelt werden.

Vorteilhafte Ausgestaltungen ergeben sich aus den Unteransprüchen.

Die Erfindung wird im Folgenden anhand der schematischen Figuren beschrieben. Dabei zeigt:
Fig. 1 ein Blockschaltbild einer ersten Ausgestaltung der Trocknungswaage,
Fig. 2 ein Blockschaltbild einer zweiten Ausgestaltung der Trocknungswaage,
Fig. 3 ein Blockschaltbild einer dritten Ausgestaltung der Trocknungswaage und
Fig. 4 eine perspektivische Ansicht der ersten Ausgestaltung der Trocknungswaage.

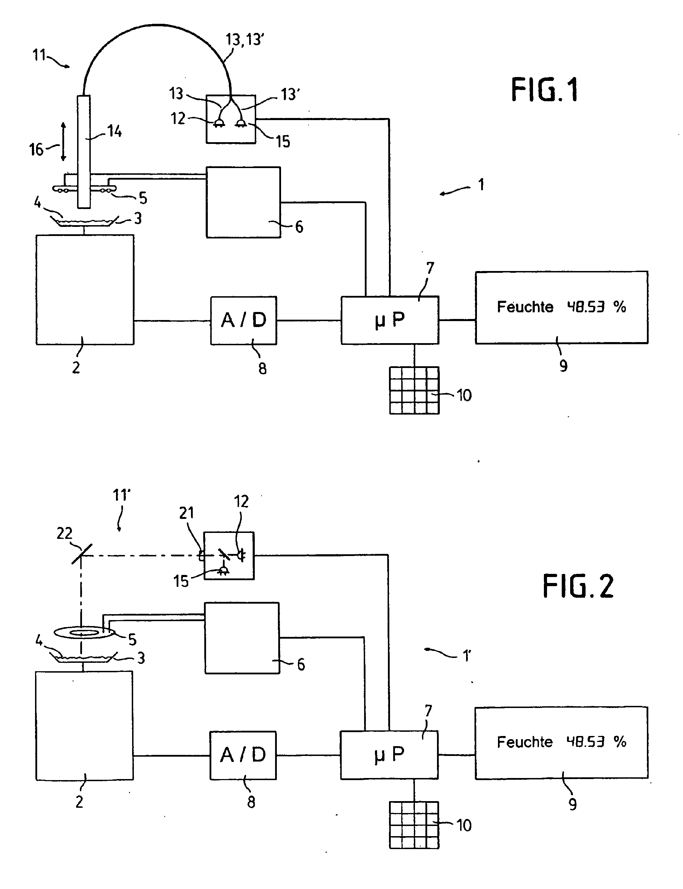

In Fig. 1 ist in Form eines Blockschaltbildes eine erste Ausgestaltung der Trocknungswaage 1 dargestellt. Sie besteht aus einem Wägesystem 2 mit einer Waagschale 3, auf der sich eine Probe 4 befindet, die getrocknet werden soll und deren Feuchtegehalt gemessen werden soll. Als Heizquelle 5 zur Erwärmung und Trocknung der Probe ist ein ringförmiger Heizstrahler angedeutet, es ist jedoch auch die Benutzung beliebiger anderer bekannter Heizquellen möglich. Die Leistung der Heizquelle 5 wird durch eine Steuerelektronik 6 gesteuert, wobei die Sollgröße für die Heizleistung durch eine zentrale Elektronik 7 vorgegeben wird. Das Ausgangssignal des Wägesystems 2 - also die momentane Masse der Probe 4 - wird durch einen Analog/Digital-Wandler 8 digitalisiert und der zentralen Elektronik zugeführt. Während des Trocknungsvorganges wird zum Beispiel die momentane Masse der Probe im Verhältnis zur Anfangsmasse der Probe in einer Anzeige 9 angezeigt; nach Abschluss des Trocknungsvorganges wird der ermittelte Feuchtegehalt angezeigt. Die Bedienung der Trocknungswaage erfolgt über eine Tastatur 10. - Die bisher beschriebenen Teile der Trocknungswaage 1 sind in ihrem Aufbau und ihrer Funktion allgemein bekannt, sodass hier auf eine detaillierte Beschreibung verzichtet werden kann. Eine detaillierte Beschreibung findet man zum Beispiel in den schon zitierten Schriften DE 36 15 660 C2 und DE 199 56 372 C2.

Die Trocknungswaage 1 weist nun zusätzlich einen Sensor 11 zur Messung des Absorptions-, Transmissions- oder Reflexionskoeffizienten der Probe 4 auf. Die Messung des Absorptions-, Transmissions- oder Reflexionskoeffizienten erfolgt dabei zum Beispiel im nahen Infrarot. Der Sensor 11 besteht im gezeichneten Beispiel aus einer Strahlungsquelle 12 in Form einer Infrarot-LED, einem oder mehreren Lichtwellenleiter(n) 13, die die Strahlung der Strahlungsquelle 12 zur Probe übertragen. Das probenseitige Ende der Lichtwellenleiter 13 ist dabei in einem rohrförmigen Endstück 14 fixiert. Die Probe 4 wird also durch das Infrarot-Licht der Strahlungsquelle 12 beleuchtet. Das von der Probe reflektierte Licht wird durch einen oder mehrere Lichtwellenleiter 13', deren Enden ebenfalls im Endstück 14 fixiert sind, aufgefangen und zu einem Strahlungsdetektor 15 in Form eines Infrarot-Fotoelementes übertragen. Der Infrarot-Spektralbereich, in dem die Reflexionsmessung erfolgt, wird dabei entweder durch die Strahlungsquelle bestimmt (schmalbandige Strahlungsquelle und breitbandiger Strahlungsdetektor) oder durch den Strahlungsdetektor (breitbandige Strahlungsquelle und schmalbandiger Strahlungsdetektor) oder durch zwischengeschaltete Filter (breitbandige Strahlungsquelle und breitbandiger Strahlungsdetektor und zwischengeschaltetes schmalbandiges Filter), wobei zum Beispiel schon die Lichtwellenleiter 13,13' bei entsprechender Glasart als schmalbandiges Filter wirken können. In einer besonders flexiblen Ausgestaltung kann auch ein Spektrometer mit einem nachgeschalteten ortsempfindlichen Fotodetektor als spektralbereichbestimmendes Filterelement benutzt werden. In dieser Ausgestaltung besteht die Möglichkeit, durch Auswerten verschiedener Bereiche des ortsempfindlichen Fotodetektors den vorgegebenen Spektralbereich zu varüeren. Dadurch können zum Beispiel zwei verschiedene Spektralbereiche unmittelbar nacheinander zur Messung benutzt werden oder es kann der benutzte Spektralbereich zum Beispiel in Abhängigkeit von der Temperatur der Probe 4 verschoben werden. Diese Verschiebung des benutzten Spektralbereiches kann zum Beispiel softwaregesteuert durch die zentrale Elektronik 7 erfolgen. - Die Abhängigkeit des Reflexionskoeffizienten vom Feuchtegehalt der Probe ist zum Beispiel im Wellenlängenbereich um 1,4 µm und im Wellenlängenbereich um 1,9 µm besonders groß, sodass diese Spektralbereiche bevorzugt genutzt werden.

Im Vorstehenden ist davon ausgegangen, dass das an der Oberfläche der Probe 4 reflektierte Infrarot-Licht gemessen wird und damit also der Reflexionskoeffizient des Probenmaterials. Dies trifft auf stark absorbierende Probenmaterialen zu, bei denen die Eindringtiefe der Strahlung gering ist. Es gibt jedoch auch Materialien, die die Strahlung im vorgegebenen Spektralbereich nur gering absorbieren. Für diese Materialien ist die Eindringtiefe der Strahlung größer als die Schichtdicke der Probe 4. Gibt man dann der Waagschale 3 eine stark reflektierende (= spiegelnde) Oberfläche, so gelangt auch der nicht absorbierte Teil der Strahlung wieder in die Lichtwellenleiter 13' und wird gemessen. In diesem Fall kann man also in der Geometrie gemäß Fig. 1 bei vorgegebener Schichtdicke auch die Überlagerung des Reflexionskoeffizienten und des Transmissionskoeffizienten messen. Für die Messung des reinen Transmissionskoeffizienten ist selbstverständlich eine Geometrie notwendig, bei der der Strahlungsdetektor (beziehungsweise das Ende der zugehörigen Lichtwellenleiter) unterhalb der (strahlungsdurchlässigen) Waagschale mit der Probe angeordnet ist (nicht gezeichnet). Der Absorptionskoeffizient wird im Allgemeinen indirekt ermittelt über den bekannten mathematischen Zusammenhang zwischen Absorptions-, Transmissions- und Reflexionskoeffizient.

In Fig. 1 ist weiter durch einen Pfeil 16 angedeutet, dass das Endstück 14 der Lichtwellenleiter vertikal verschiebbar angeordnet ist. Dadurch kann sich das Endstück 14 während der Messung des Absorptions-, Transmissions- oder Reflexionskoeffizienten dicht oberhalb der Oberfläche der Probe 4 befinden, um eine gute Strahlungsausbeute für den Strahlungsdetektor zu erreichen; zwischen den einzelnen Messungen kann sich das Endstück 14 höher befinden, damit es keine Abschattung der Probe für die Strahlung der Heizquelle 5 erzeugt und damit die Gleichmäßigkeit der Heizung der Probe nicht verschlechtert. In Fig. 1 ist das Endstück 14 in einer mittleren Stellung gezeichnet. - Bei der Messung des Transmissionskoefrizienten, bei dem es auf eine vorgegebene Schichtdicke der Probe ankommt., ist es auch denkbar, die untere Endstellung des Endstückes 14 zur Einstellung der vorgegebenen Schichtdicke zu benutzen.

Ist die Heizquelle 5 eine Strahlungsheizung, die im selben Spektralbereich (Heiz-)Strahlung aussendet, in dem auch die (Mess-)Strahlungsquelle 12 (Mess-)Strahlung aussendet, so kann in bekannter Weise durch einen getakteten Betrieb der (Mess-)Strahlungsquelle 12 eine störungsfreie Messung erreicht werden (Chopper-Betrieb).

Soll der Messwert für den Absorptions-, Transmissions- oder Reflexionskoeffizienten über einen größeren Flächenbereich der Probe 4 gemittelt gemessen werden, so ist dies leicht durch eine drehbare Waagschale mit Drehantrieb und eine etwas ausmittige Anordnung des Endstückes 14 möglich.

In Fig. 2 ist eine zweite Ausgestaltung der Trocknungswaage als Blockschaltbild gezeigt. Gleiche Teile wie in Fig. 1 sind mit den gleichen Bezugszahlen bezeichnet und werden nicht noch einmal erläutert. Die Trocknungswaage 1' in Fig. 2 besitzt statt der Lichtwellenleiter-Optik eine Freistrahl-Optik. Dementsprechend besteht der Sensor 11' zur Messung des Absorptions-, Transmissions- oder Reflexionskoeffizienten aus der Strahlungsquelle 12, einer Fokussieroptik 21 und einem Umlenkspiegel 22. Dadurch wird die Strahlung der Strahlungsquelle 12 auf die Oberfläche der Probe 4 gebündelt und die von der Oberfläche der Probe reflektierte Strahlung in entsprechender Weise auf den Strahlungsdetektor 15 gebündelt. Die Fokussieroptik 21 ist selbstverständlich nur ganz schematisch angedeutet, beispielsweise könnte auch der Umlenkspiegl 22 konkav ausgebildet sein und die Fokussierung übernehmen. Diese in Fig. 2 gezeigte Freistrahl-Optik arbeitet genauso wie die in Fig. 1 gezeigte Lichtwellenleiter-Optik und erlaubt alle dort erwähnten Varianten.

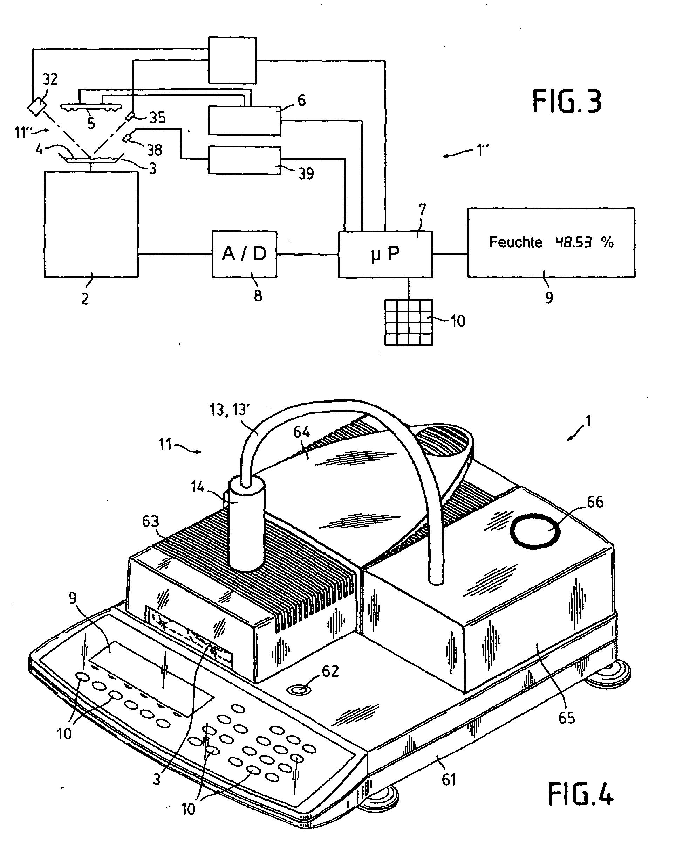

In Fig. 3 ist eine dritte Ausgestaltung der Trocknungswaage als Blockschaltbild gezeigt. Diese Ausgestaltung ähnelt der Ausgestaltung aus Fig. 2; gleiche Teile wie in Fig. 2 sind mit den gleichen Bezugszahlen bezeichnet und werden nicht noch einmal erläutert. Bei der Trocknungswaage 1" in Fig. 3 sind die Strahlungsquelle 32 und der Strahlungsdetektor 35 getrennt angeordnet und bestrahlen die Probe 4 unter 45° und messen das reflektierte Infrarot-Licht ebenfalls unter 45°. Ansonsten arbeiten sie genauso wie die Ausgestaltungen gemäß Fig. 1 und 2.

In Fig. 3 ist weiterhin ein Sensor 38 zur Messung der Temperatur der Probe 4 angedeutet. Dieser Sensor kann zum Beispiel berührungslos arbeiten. Das Signal des Sensors 38 wird in der zugehörigen Auswerteelektronik 39 ausgewertet und der zentralen Elektronik 7 zugeführt. Die zentrale Elektronik kann dann eventuell notwendige Temperaturkorrekturen vornehmen, um Temperaturabhängigkeiten einzelner Sensoren beziehungsweise eine Temperaturabhängigkeit der Absorptions-, Transmissions- oder Reflexionskoeffizienten zu korrigieren.

Die in den Fig. 1 bis 3 gezeigten Ausgestaltungen arbeiten alle im Infrarot-Spektralbereich. Selbstverständlich ist auch die Benutzung jedes anderen optischen Spektralbereiches möglich.

Beim Einsatz der erfindungsgemäßen Trocknungswaage in einer der Ausgestaltungen wird zweckmäßigerweise eine Probe 4 mit maximalem Feuchtegehalt benutzt. Während des Trocknungsvorganges wird in kurzen Zeitabständen zum einen das Signal des Sensors 11,11',11" aufgenommen und in der zentralen Elektronik 7 gespeichert; zum anderen wird jeweils praktisch gleichzeitig das vom Wägesystem 2 ermittelte momentane Probengewicht aufgenommen und ebenfalls in der zentralen Elektronik 7 gespeichert. Es entstehen dort also Wertepaare für das Sensorsignal und das Probengewicht. Nach Abschluss des Trocknungsvorganges und dem damit bekannten Trockengewicht können dann die jeweiligen zwischenzeitlichen Probengewichte auf Feuchtegehalte (oder auch auf Atro-Werte) umgerechnet werden. Die daraus dann errechenbaren Wertepaare für das Sensorsignal und den zugehörigen Feuchtegehalt ergeben direkt die einzelnen Punkte der Kalibrierkurve des Sensors. Mit einem einzigen Trocknungsvorgang kann dadurch die komplette Kalibrierkurve des jeweiligen Sensors für die jeweilige Probenart ermittelt werden.

Während die Figuren 1-3 schematische Blockschaltbilder zur Erläuterung der Funktionsweise sind, ist in Fig. 4 ein wirkliches Gerät in einer perspektivischen Ansicht dargestellt. Dieses Gerät arbeitet mit einer Glasfaser-Optik im infraroten Spektralbereich, also gemäß dem Blockschaltbild in Fig. 1. Gleiche Teile wie im Blockschaltbild von Fig. 1 sind mit den gleichen Bezugszahlen bezeichnet, auch wenn diese Teile in Fig. 4 zeichnerisch anders dargestellt sind.

Von der Trocknungswaage 1 in Fig. 4 erkennt man ein Gehäuse 61, die Anzeige 9, die Bedienungstastatur 10 und eine Libelle 62. Von der Waagschale 3 ist nur ein kleiner Teil unter dem verschiebbaren Gehäuseteil 63 erkennbar. Zum Beschicken der Waagschale kann das verschiebbare Gehäuseteil 63 nach hinten unter das Gehäuseteil 64 verschoben werden. Die Heizquelle zur Erwärmung der Probe ist direkt unter der oberen Wand des verschiebbaren Gehäuseteiles 63 befestigt und wird mit diesem zusammen verschoben. Vom Sensor 11 zur Messung des Absorptions-, Transmissions- oder Reflexionskoeffizienten der Probe erkennt man das Endstück 14 und die Lichtwellenleiter 13,13'. Die Strahlungsquelle und der Strahlungsdetektor sind im Gehäuseteil 65 untergebracht und daher nicht erkennbar. Das Endstück 14 kann in zwei verschiedenen Höhen fixiert werden: in einer tieferen Messstellung und in einer etwas höheren Wartestellung, wie es weiter oben im Zusammenhang mit Fig. 1 bereits erläutert wurde.

Nach Abschluss des Trocknungs- und Kalibriervorganges kann das Endstück 14 aus der Öffnung im verschiebbaren Gehäuseteil 63 herausgenommen werden und in eine Öffnung 66 umgesetzt werden (Parkstellung). Das verschiebbare Gehäuseteil 63 kann dann nach hinten verschoben werden, und die Waagschale 3 ist zum Wechsel der Probe frei zugänglich. Das Aus- und Einschalten der Heizquelle erfolgt synchron mit dem Zurückfahren beziehungsweise Vorfahren des verschiebbaren Gehäuseteiles 63.

### Bezugszeichenliste

- 1,1',1": Trocknungswaage
- 2: Wägesystem
- 3: Waagschale
- 4: Probe
- 5: Heizquelle
- 6: Steuerelektronik
- 7: Elektronik
- 8: Analog/Digital-Wandler
- 9: Anzeige
- 10: Tastatur
- 11,11',11": Sensor
- 12: Strahlungsquelle
- 13, 13': Lichtwellenleiter
- 14: Endstück
- 15: Strahlungsdetektor
- 16: Pfeil für Verschiebbarkeit
- 21: Fokussieroptik
- 22: Umlenkspiegel
- 32: Strahlungsquelle
- 35: Strahlungsdetektor
- 38: Sensor zur Messung der Temperatur
- 39: Auswerteelektronik
- 61: Gehäuse
- 62: Libelle
- 63: Verschiebbares Gehäuseteil
- 64: Gehäuseteil
- 65: Gehäuseteil
- 66: Öffnung

## Patentansprüche

1. Trocknungswaage mit einer Waagschale (3, 53), die sich auf einem Wägesystem (2) abstützt, und mit einer Heizquelle (5) zur Erwärmung und Trocknung einer Probe (4) auf der Waagschale, **dadurch gekennzeichnet, dass** zusätzlich zum Wägesystem (2) zur Messung des feuchteabhängigen Gewichtes der Probe (4) ein Sensor (11, 11',11 ") zur gleichzeitigen Messung des feuchteabhängigen Absorptions-, Transmissions- oder Reflexionskoeffizienten der Probe (4) in mindestens einem vorgegebenen optischen Spektralbereich zumindest teilweise in die Trocknungswaage (1,1',1") integriert ist.

2. Trocknungswaage nach Anspruch 1, **dadurch gekennzeichnet, dass** der Sensor (11,11',11") zur Messung des Absorptions-, Transmissions- oder Reflexionskoeffizienten aus einer Strahlungsquelle (12, 32), die die Probe (4) mit elektromagnetischer Strahlung, die zumindest den vorgegebenen Spektralbereich umfasst, bestrahlt, und aus einem Strahlungsdetektor (15, 35), der die von der Probe reflektierte oder durchgelassene Strahlung im vorgegebenen Spektralbereich detektiert, besteht.

3. Trocknungswaage nach Anspruch 2, **dadurch gekennzeichnet, dass** der Spektralbereich den Wellenlängenbereich um 1,4 µm umfasst.

4. Trocknungswaage nach Anspruch 2, **dadurch gekennzeichnet, dass** der Spektralbereich den Wellenlängenbereich um 1,9 µm umfasst.

5. Trocknungswaage nach einem der Ansprüche 2 bis 4, **dadurch gekennzeichnet, dass** der vorgegebene Spektralbereich durch in den Strahlengang eingebrachte Filterelemente vorgegeben ist.

6. Trocknungswaage nach einem der Ansprüche 2 bis 4, **dadurch gekennzeichnet, dass** der vorgegebene Spektralbereich durch die Strahlungsquelle (12, 32) vorgegeben ist.

7. Trocknungswaage nach einem der Ansprüche 2 bis 4, **dadurch gekennzeichnet, dass** der Spektralbereich durch den Strahlungsdetektor (15, 35) vorgegeben ist.

8. Trocknungswaage nach einem der Ansprüche 2 bis 4, **dadurch gekennzeichnet, dass** der Sensor ein Spektrometer umfasst und dass der vorgegebene Spektralbereich softwaremäßig vorgegeben ist.

9. Trocknungswaage nach Anspruch 8, **dadurch gekennzeichnet, dass** der Spektralbereich temperaturabhängig vorgegeben ist.

10. Trocknungswaage nach einem der Ansprüche 3 oder 4, **dadurch gekennzeichnet, dass** die Strahlungsquelle (12) und/ oder der Strahlungsdetektor (15) über Lichtwellenleiter (13,13') angekoppelt sind/ ist.

11. Trocknungswaage nach Anspruch 10, **dadurch gekennzeichnet, dass** das der Probe (4) zugewandte Ende der Lichtwellenleiter (13,13') vertikal verschiebbar ist.

12. Trocknungswaage nach einem der Ansprüche 2 bis 8, **dadurch gekennzeichnet, dass** die Strahlungsquelle und/ oder der Strahlungsdetektor vertikal verschiebbar sind/ ist.

13. Trocknungswaage nach einem der Ansprüche 2 bis 12, **dadurch gekennzeichnet, dass** die Strahlungsquelle getaktet ist.

14. Trocknungswaage nach einem der Ansprüche 2 bis 13, **dadurch gekennzeichnet, dass** die Oberseite der Waagschale (3) im vorgegebenen Spektralbereich eine stark reflektierende Oberfläche aufweist.

15. Trocknungswaage nach einem der Ansprüche 2 bis 14, **dadurch gekennzeichnet, dass** die Strahlungsquelle gleichzeitig Heizquelle ist.

16. Trocknungswaage nach einem der Ansprüche 1 bis 15, **dadurch gekennzeichnet, dass** die Waagschale (3) drehbar gelagert ist.

17. Trocknungswaage nach einem der Ansprüche 1 bis 16, **dadurch gekennzeichnet, dass** zusätzlich ein Sensor (38) zur Messung der Temperatur der Probe (4) vorhanden ist und in der Elektronik (7) der Trocknungswaage Auswertealgorithmen vorhanden sind, die die Daten des Sensors (11") zur Messung des Absorptions-, Transmissions- oder Reflexionskoeffizienten der Probe temperaturabhängig korrigieren.

18. Verfahren zum Betrieb einer Trocknungswaage nach Anspruch 1, **dadurch gekennzeichnet, dass** eine Probe (4) mit maximalem Feuchtegehalt benutzt wird und von dieser Probe während des Trocknungsvorganges eine Vielzahl von Wertepaaren für den feuchteabhängigen Absorptions-, Transmissions- oder Reflexionskoeffizienten und für das zugehörige Probengewicht aufgenommen werden.

## Claims

1. Drying weighing machine with a weighing pan (3, 53), which is supported on a weighing system (2), and with a heat source (5) for heating and drying a sample (4) on the weighing pan, **characterised in that** in addition to the weighing system (2) for measuring the moisture-dependent weight of the sample (4) a sensor (11, 11', 11 ") for simultaneous measurement of the moisture-dependent absorption, transmission or reflection coefficient of the sample (4) in at least one predetermined optical spectral range is integrated at least partly in the drying weighing machine (1, 1', 1").

2. Drying weighing machine according to claim 1, **characterised in that** the sensor (11, 11', 11 ") for measuring the absorption, transmission or reflection coefficient consists of a radiation source (12, 32), which irradiates the sample (4) with electromagnetic radiation comprising at least the predetermined spectral range, and of a radiation detector (15, 35) which detects the radiation in the predetermined spectral range reflected by or passed through the sample.

3. Drying weighing machine according to claim 2, **characterised in that** the spectral range comprises the wavelength range about 1.4 micrometres.

4. Drying weighing machine according to claim 2, **characterised in that** the spectral range comprises the wavelength range about 1.9 micrometres.

5. Drying weighing machine according to any one of claims 2 to 4, **characterised in that** the predetermined spectral range is predetermined by filter elements inserted in the radiation path.

6. Drying weighing machine according to any one of claims 2 to 4, **characterised in that** the predetermined spectral range is predetermined by the radiation source (12, 32).

7. Drying weighing machine according to any one of claims 2 to 4, **characterised in that** the spectral range is predetermined by the radiation detector (15, 35).

8. Drying weighing machine according to any one of claims 2 to 4, **characterised in that** the sensor comprises a spectrometer and that the predetermined spectral range is
predetermined by software.

9. Drying weighing machine according to claim 8, **characterised in that** the spectral range is predetermined in dependence on temperature.

10. Drying weighing machine according to one of claims 3 and 4, **characterised in that** the radiation source (12) and/or the radiation detector (15) is or are coupled by way of optical waveguides (13, 13').

11. Drying weighing machine according to claim 10, **characterised in that** the end of the optical waveguides (13, 13') facing the sample (4) is vertically displaceable.

12. Drying weighing machine according to any one of claims 2 to 8, **characterised in that** the radiation source and/or the radiation detector is or are vertically displaceable.

13. Drying weighing machine according to any one of claims 2 to 12, **characterised in that** the radiation source is pulsed.

14. Drying weighing machine according to any one of claims 2 to 13, **characterised in that** the upper side of the weighing pan (3) has a strongly reflective surface in the predetermined spectral range.

15. Drying weighing machine according to any one of claims 2 to 14, **characterised in that** the radiation source is at the same time the heating source.

16. Drying weighing machine according to any one of claims 1 to 15, **characterised in that** the weighing pan (3) is mounted to be rotatable.

17. Drying weighing machine according to any one of claims 1 to 16, **characterised in that** in addition a sensor (38) for measuring the temperature of the sample (4) is present and evaluating algorithms, which correct the data of the sensor (11") for measuring the absorption, transmission or reflection coefficient of the sample in dependence on temperature, are present in the electronic system (7) of the drying weighing machine.

18. Method of operating a drying weighing machine according to claim 1, **characterised in that** a sample (4) with maximum moisture content is used and a plurality of value pairs for the moisture-dependent absorption, transmission or reflection coefficient and for the associated sample weight are recorded from this sample during the drying process.

## Revendications

1. Balance sécheuse comportant un plateau de pesée (3, 53) reposant sur un système de pesée (2) et comportant une source de chaleur (5) permettant de chauffer et de sécher un échantillon (4) se trouvant sur le plateau de pesée, **caractérisée en ce que**, en plus du système de pesée (2) servant à mesurer le poids de l'échantillon (4) en fonction de l'humidité, un capteur (11, 11', 11") servant à mesurer simultanément le coefficient d'absorption, de transmission ou de réflexion de l'échantillon (4) en fonction de l'humidité dans au moins un domaine spectral optique prédéfini est intégré au moins partiellement dans la balance sécheuse (1, 1', 1").

2. Balance sécheuse selon la revendication 1, **caractérisée en ce que** le capteur (11, 11', 11") servant à mesurer les coefficients d'absorption, de transmission ou de réflexion se compose d'une source de rayonnement (12, 32) irradiant l'échantillon (4) d'un rayonnement électromagnétique comprenant au moins le domaine spectral prédéfini, ainsi que d'un détecteur de rayonnement (15, 35), lequel détecte dans le domaine spectral prédéfini le rayonnement réfléchi par l'échantillon ou traversant ce dernier.

3. Balance sécheuse selon la revendication 2, **caractérisée en ce que** le domaine spectral comprend la plage de longueurs d'onde de 1,4 µm.

4. Balance sécheuse selon la revendication 2, **caractérisée en ce que** le domaine spectral comprend la plage de longueurs d'onde de 1,9 µm.

5. Balance sécheuse selon l'une quelconque des revendications 2 à 4, **caractérisée en ce que** le domaine spectral prédéfini est prédéfini par les éléments de filtrage intégrés à la trajectoire des rayons.

6. Balance sécheuse selon l'une quelconque des revendications 2 à 4, **caractérisée en ce que** le domaine spectral prédéfini est prédéfini par la source de rayonnement (12, 32).

7. Balance sécheuse selon l'une quelconque des revendications 2 à 4, **caractérisée en ce que** le domaine spectral est prédéfini par le détecteur de rayonnement (15, 35).

8. Balance sécheuse selon l'une quelconque des revendications 2 à 4, **caractérisée en ce que** le capteur comprend un spectromètre, et **en ce que** le domaine spectral prédéfini est prédéfini par un logiciel.

9. Balance sécheuse selon la revendication 8, **caractérisée en ce que** le domaine spectral est prédéfini en fonction de la température.

10. Balance sécheuse selon l'une quelconque des revendications 3 ou 4, **caractérisée en ce que** la source de rayonnement (12) et/ou le détecteur de rayonnement (15) est/sont couplés(e)(s) par l'intermédiaire de fibres optiques (13, 13').

11. Balance sécheuse selon la revendication 10, **caractérisée en ce que** l'extrémité des fibres optiques (13, 13'), tournée vers l'échantillon (4) peut être déplacée de manière verticale.

12. Balance sécheuse selon l'une quelconque des revendications 2 à 8, **caractérisée en ce que** la source de rayonnement et/ou le détecteur de rayonnement peut/peuvent être déplacé(e)(s) de manière verticale.

13. Balance sécheuse selon l'une quelconque des revendications 2 à 12, **caractérisée en ce que** la source de rayonnement est synchronisée.

14. Balance sécheuse selon l'une quelconque des revendications 2 à 13, **caractérisée en ce que** la partie supérieure du plateau de pesée (3) présente une surface fortement réfléchissante dans le domaine spectral prédéfini.

15. Balance sécheuse selon l'une quelconque des revendications 2 à 14, **caractérisée en ce que** la source de rayonnement est en même temps une source de chaleur.

16. Balance sécheuse selon l'une quelconque des revendications 1 à 15, **caractérisée en ce que** le plateau de pesée (3) est logé de manière à pouvoir tourner.

17. Balance sécheuse selon l'une quelconque des revendications 1 à 16, **caractérisée en ce qu'**en outre un capteur (38) servant à mesurer la température de l'échantillon (4) est disponible, et **en ce que** des algorithmes d'évaluation sont disponibles dans le système électronique (7) de la balance sécheuse, lesquels corrigent, en fonction de la température, les données du capteur (11") servant à mesurer les coefficients d'absorption, de transmission ou de réflexion de l'échantillon.

18. Procédé d'exploitation d'une balance sécheuse selon la revendication 1, **caractérisé en ce qu'**on utilise un échantillon (4) avec une teneur en humidité maximale, et **en ce qu'**une pluralité de couples de valeurs pour les coefficients d'absorption, de transmission ou de réflexion en fonction de l'humidité et pour le poids de l'échantillon associé est prélevée de cet échantillon au cours du processus de séchage.
